Europäisches Patentamt

(19) European Patent Office

Office européen des brevets

(11) **EP 0 511 167 B1**

(12) **EUROPEAN PATENT SPECIFICATION**

(45) Date of publication and mention
of the grant of the patent:
**06.11.1996 Bulletin 1996/45**

(51) Int. Cl.$^6$: **A01N 47/14**, A01N 43/653
// (A01N47/14, 43:653),
(A01N43/653, 47:14)

(21) Application number: **92810287.0**

(22) Date of filing: **21.04.1992**

(54) **Control of downy mildew and Phytophthora using cyproconazole and dithiocarbamates**

Bekämpfung von falschem Mehltau und Phytophthora mittels Cyproconazol und Dithiocarbamaten.

Contrôle du mildiou et du Phytophthora avec le cyproconazole et les dithiocarbamates

(84) Designated Contracting States:
**CH ES FR GR IT LI PT**

(30) Priority: **24.04.1991 FR 9105050**

(43) Date of publication of application:
**28.10.1992 Bulletin 1992/44**

(73) Proprietor: **SANDOZ LTD.**
**4002 Basel (CH)**

(72) Inventor: **Rouas, Gilles**
**F-78450 Villepreux (FR)**

(56) References cited:
**EP-A- 0 096 307        EP-A- 0 096 658**
**EP-A- 0 316 024        EP-A- 0 316 970**
**DE-A- 3 333 449**

- **CHEMICAL PATENTS INDEX, BASIC
  ABSTRACTS JOURNAL, Section Ch, Week 8516,
  12 June 1985, Derwent Publications Ltd.,
  London (GB); Class C, AN 095326; and AN
  095327**
- **CHEMICAL PATENTS INDEX, BASIC
  ABSTRACTS JOURNAL Section Ch, Week 8619,
  2 July 1986 Derwent Publications Ltd., London,
  GB; Class C, AN 123242**

- **CHEMICAL PATENTS INDEX, BASIC
  ABSTRACTS JOURNAL Section Ch, Week 8910,
  03 May 1989 Derwent Publications Ltd., London,
  GB; Class C, AN 74983 (ANONYMOUS) 10
  January 1989**
- **CHEMICAL PATENTS INDEX, BASIC
  ABSTRACTS JOURNAL Section Ch, Week 8411,
  09 May 1984 Derwent Publications Ltd., London,
  GB; Class C, AN 065020**
- **CHEMICAL PATENTS INDEX, BASIC
  ABSTRACTS JOURNAL Section Ch, Week 8842,
  14 December 1988 Derwent Publications Ltd.,
  London, GB; Class C, AN 296420**
- **PHYTOPROTECTION, vol. 71, 1990, Quebec, PQ
  CA); J. WARNER, pp. 1-8**
- **PHYTOPROTECTION, vol. 71, 1990, Quebec, PQ
  (CA); A.R. BIGGS et al., pp. 9-15**
- **R. WEGLER, "Chemie der Pflanzenschutz- und
  Schädlingsbekämpfungsmittel", vol. 6,
  Springer-Verlag, 1981; pp. 389-396**

Remarks:
The file contains technical information submitted
after the application was filed and not included in
this specification

Description

The object of the present invention is an improved process for the control of downy mildew and phytophthora species on plants.

Mildew (downy mildew in English literature) is a cryptogamic disease which is the cause of important devastation of plants, notable potatoes, tomatoes and especially the grapevine. The different fungi responsible for this disease belong to order of Oomycetes, such as Plasmopara viticola in the grapevine. A certain number of products are available commercially for the control of downy mildew. Of these, the dithiocarbamate fungicides are generally used to control downy mildew, for example mancozeb at doses varying between 160 and 320 g/hl depending i.a. on the plants to be treated. However, their usage introduces disadvantages. Being preventive fungicides effective by contact, the efficiency of these compositions is limited by the fact that they are easily washed away by rain and that the plant parts formed after treatment are not protected, which means that it is necessary to renew the treatment and consequently to additionally supply active material which increases the cost of treatment and the risk of pollution of the environment. Whilst carrying out research in this field, the applicant has now surprisingly and unexpectedly found that ergosterol biosynthesis inhibiting fungicides (EBI fungicides) belonging to the triazole family enable a considerable reduction to be made in the dose of dithiocarbamate fungicide necessary to control downy mildew on plants, whilst remaining extremely effective. This is even more surprising given the fact that EBI fungicides, whilst allowing the control of rust and powdery mildew, are essentially ineffective against downy mildew on plants, which are Oomycetes fungi not synthesising sterols.

The invention therefore provides a method of controlling downy mildew and phytophtora species on plants, which comprises treating the downy mildew and phytophthora species, the plant to be protected or its locus with a downy mildew and phytophthora species controlling aggregate amount of cyproconazole [hereinafter called Component (b)] and a dithiocarbamate fungicide selected from zineb, maneb, mancopper, mancozeb and propineb [hereinafter called Component (a)], characterised in that Component (a) is employed at an application rate which is below that necessary to control downy mildew and phytophthora species when employed as sole active agent.

The amount of Component (b) to be employed to attain the desired effect is equal to or below the application rate necessary to control rust and/or powdery mildew on plants. The application rate of cyproconazole necessary to control rust and/or powdery mildew on plants is hereinafter designated Effective Application Rate.

Preferably Component (b) is employed at a rate which is lower than the Effective Application Rate.

The amount of cyproconazole and of dithiocarbamate fungicide to be applied depends on various factors, such as the components employed the type of treatment (plants, soil), the method of treatment (for example, spraying, dusting), the purpose of treatment (prophylactic or phytotherapeutic) and the period of application. In general, however, satisfactory results are obtained when applying to the downy mildew or the plants 0.005 to 0.100 kg, in particular 0.005 to 0.050, more in particular 0.005 to 0.030 kg, especially 0.005 to 0.020 kg, most preferably 0.005 to 0.015 kg of cyproconazole per hectare, together with 0.7 to 2.1 kg/ha, in particular 1.2 to 1.8 kg/ha, especially 1.3 and 1.6 kg/ha, more particularly 1.3 to 1.5 kg/ha of a dithiocarbamate fungicide (preferably mancozeb). According to a preferred embodiment, good result in controlling downy mildew on the grapevine are obtained when using 0.005 to 0.015 kg/ha, especially 0.01 kg/ha, of cyproconazole, together with 1.3 to 1.5 kg/ha, especially 1.4 kg/ha, of mancozeb.

Application of cyproconazole and of the dithiocarbamate fungicide whether together or separately, may be effected according to known methods, assisted by conventional equipment. The compounds are preferably applied by spraying, generally employing a volume of application of between 0.05 and 15 hl per hectare, for example between 0.05 and 0.5 hl/ha for aerial application and between 2 and 15 hl/ha for customary (terrestrial or land) application.

In the present application, and in accordance with what is known from literature, an EBI triazole fungicide is understood to be a fungicide belonging to the class of triazoles which is active against rust and powdery mildew, for example by inhibiting C-14 demethylation of ergosterol biosynthesis in the fungi responsible for these diseases, but essentially inactive against downy mildew on plants. The application rate necessary to control rust and/or powdery mildew with an EBI triazole fungicide on plants is known. This Effective Application Rate varies according to the EBI fungicide used and is in general between 10 and 100 g/ha and may even be lover depending on the particular EBI fungicide employed. It may, for example be in the range of from 10 to 12 g/ha for cyproconazole for treatment of powdery mildew in the grapevine. According to the invention, the amount of Component (b) employed to achieve a potentiating effect on the fungicidal activity of Component (a) against downy mildew is conveniently equal to or lower than the Effective Application Rate; a potentiating effect is even observed when employing an amount of Component a) that is 50 % and more, even 75 % and more and most surprisingly even 85 % and more lower than the Effective Application Rate. For control of downy mildew on plants Component a) is, when applied without Component b) normally employed at application rates of from 2.5 and 3 kg/ha, notably 2.8 kg/ha. The cyproconazole according to the invention allows a net reduction in this dose for the control of downy mildew on plants. The rate reduction (of Component a) is substantial and can easily be 25 % or more especially more than 40 % and preferably 50 % or more.

Mixtures of an EBI triazole fungicide with mancozeb have already been proposed. Thus, a mixture of myclobutanil and mancozeb was proposed to control powdery mildew, black rot, downy mildew and parasitic rougeot of the grapevine. As with other known mixtures of mancozeb and EBI fungicides other than those belonging to the triazole family, the activity of this mixture against downy mildew is based solely on the normal rate of use of mancozeb that is employed (2.8 kg/ha), myclobutanol only being added to this latter at the normal rate of use to expand the spectrum of action of mancozeb with a view to controlling powdery mildew also. In all these mixtures, the EBI fungicide is not employed to reduce the dose of mancozeb necessary to control downy mildew and is not employed at a dose lower than the Effective Application Rate. A mixture of cyproconazole and mancozeb has similarly been proposed. However, such a mixture is intended to control only rust, powdery mildew and node canker of wheat, and not downy mildew of plants. In other respects, mancozeb is only used in this mixture to make up to the normal rate of use of cyproconazole to control cryptogamic diseases of wheat. Also a mixture of cyproconazole and mancozeb for the control of apple scab has been proposed. The prior art documents disclosing the above outlined mixtures are: EP-A-096307; EP-A-316970; Derwent Abstract 85-095326/16 (referring to JP 60042309); Derwent Abstract 85-095327/16 (referring to JP 60042310); EP-A-096658; Derwent Abstract 86-123242/19 (referring to JP 61063605); Derwent Abstract 89-074983/10 (referring to Research Disclosure 297048); EP-A-316024; Derwent Abstract 84-065020/11 (referring to JP 59020203); Derwent Abstract 88-296420/42 (referring to JP 63216805); DE-OS 3333449; Phytoprotection 71, 1990, pp 1-8; Phytoprotection 71, 1990, pp 9-15; Chemie der Pflanzenschutz- und Schädlingsbekämpfungsmittel, Vol 6, WEBER, pp 389-396.

EBI triazole fungicides are known and their activity against rust and powdery mildew of plants is largely described in literature. The dithiocarbamate fungicide is preferably mancozeb.

The invention also relates to the use of cyproconazole (Component [b]) as a potentiator in a fungicidal composition containing a dithiocarbamate fungicide as defined above (Component [a]), and cyproconazole (Component [b]) and an agriculturally acceptable diluent for the control of downy mildew and phytophthora species with a reduced amount of dithiocarbamate fungicide as defined above (Component [a]).

The term reduced amount of Component (a) as employed herein, refers to an amount lower than the amount of Component (a) effective to control downy mildew and phytophthora species when applied as sole active ingredient.

The amount by which the amount of Component (a) effective to control downy mildew can be reduced when applied as sole active ingredient gives and indication of the potentiating effect of Component (b), since the latter shows when applied as sole active agent essentially no activity against downy mildew.

The invention also provides a fungicidal composition containing:

cyproconazole (b)

and

Component (a)

together with agriculturally acceptable diluents for the control of downy mildew and phytophthora species characterised in that it contains a quantity of Component (b) capable of potentiating the fungicidal effect of Component (a) against downy mildew and phytophthora species wherein the weight ratio of Component (b): Component (a) is in the range of from 1:360 to 1:40.

As indicated earlier, the content of Component (b) in the fungicide of the invention, will conveniently be selected such that its application rate will be equal to the Effective Application Rate (i.e. 10 to 100 g/ha) or lower. Satisfactory potentiating effects will in general be obtained with contents of Component (b) corresponding with application rates in the range of from 5 to 100 g particularly of from 5 to 50 g of Component (b) per hectare.

The content of Component (a) in the fungicidal composition of the invention will conveniently be selected such that its volume to be applied per hectare (where desired after dilution with e.g. water) contains from 0.7 to 2.1 kg product.

Preferred fungicides of the invention contain mancozeb as Component (a).

In the mixture according to the invention, the weight ratio of cyproconazole to the dithiocarbamate fungicide as specified above, is advantageously between 1:320 and 1:65 and more particularly between 1:300 and 3:260 (i.e. ca. 1:87). A suitable weight ratio is for example 1:130 to 150, notable 1:140.

In general it is particularly advantageous to employ at least 110 parts by weight of dithiocarbamate fungicide together with 1 part by weight of cyproconazole. The mixture, as defined above, of components a) and b) is notable for its remarkable fungicidal activity against downy mildew and phytophthora species of plants. In particular, such a mixture has proved to be effective to control downy mildew of the grapevine, the potato, tobacco, ornamental plants and market-garden produce, such as tomatoes, peas, lettuce, etc...., especially downy mildew of the grapevine. On the grapevine, such a mixture possesses moreover fungicidal activity against powdery mildew and other secondary diseases of the grapevine, such as black rot and parasitic rougeot. The mixture of Components a) and b) as defined above is thus particularly suitable for the control of downy mildew in plants such as the grapevine, potatoes, tobacco, tomatoes and other solanacea, citrus fruit, strawberries, vegetables and ornamental plants, for example for the control of fungi of the genus Plasmopara, for example Plasmopara viticola in the grapevine, the genus Phytophthora, for example Phytophthora infestans in the cultivation of potatoes, tomatoes and other Solanacea, Phytophthora parasitica in the cultivation of tomatoes and other Solanaceae, Phytophthora cryptogaea in the cultivation of tomatoes and other Solanaceae, and Phytophthora cactorum and Phytophthora fragariae in the cultivation of strawberries, the genus Bremia, for example Bremia lactucae in plants such as lettuce, the genus Peronospora, for example Peronospora tabacina in tobacco, as well as the control of fungi of the genus Guignardia, for example Guignardia bidwellii in the grapevine, the genus Pseu-

EP 0 511 167 B1

dopeziza, for example Pseudopeziza tracheiphila in the grapevine, and the genus Botrytis in the grapevine and in lettuce, for example Botrytis cinerea in the grapevine.

The mixture of Components a) and b) as described above, is preferably used to control downy mildew of the grapevine.

According to a preferred embodiment, the invention relates to the use of a mixture comprising cyproconazole and mancozeb, in the weight ratios mentioned above, to control downy mildew of the grapevine. Such a mixture allows downy mildew of the grapevine to be controlled with doses of mancozeb as weak as 1.4 kg/ha instead of 2.8 kg/ha.

The fungicidal compositions of the invention may exist in solid or liquid form, for example in the form of wettable powder, as a concentrated suspension which is dispersible in water, as a powder for dusting, as a granule, or as a composition having delayed release, containing the usual diluents, and they may be prepared according to known methods, for example by mixing the active materials with a diluent and eventually with other formulation agents such as surfactants.

The diluents are understood to be liquid or solid products which are acceptable in agriculture, capable of being added to active materials so as to put them in a form of application which is simpler or improved, or to enable them to be used at the desired concentration. They may be for example talc, kaolin, diatomaceous earth polyglycol or water.

The composition intended for spraying, such as concentrates which are dispersible in water or wettable powders, may contain surfactants such as wetting agents and dispersants, for example the product of condensation of formaldehyde with a naphthalene sulphonate, an alkylaryl sulphonate, a lignin sulphonate, a fatty alcohol sulphate, an ethoxylated alkylphenol and an ethoxylated fatty alcohol.

In general, the fungicidal compositions consist of 0.01 to 90 % by weight of active material, 0 to 20 % by weight of surfactant which is acceptable in agriculture and 99.99 to 20 % by weight of one or several solid or liquid diluents, the active material being in the proportions indicated above. The concentrated forms generally contain between about 2 to 90 %, preferably between about 5 and 70 % by weight of active materials. The forms which are ready for use may contain for example 0.01 to 45 % by weight, preferably 0.01 to 5 % by weight of active material.

Examples of suitable application forms of the fungicidal compositions of the invention contain from 0.7 to 2.1 kg of Component (a) in 1000 liter spray liquor.

In addition to the usual diluents and surfactants, the compositions may contain other additives having specific effects, for example stabilizers, agents which improve adhesion to plants, corrosion inhibitors, anti-foaming agents and colourants.

In the following examples, which illustrate the invention without limiting its scope in any way, the parts are by weight.

## EXAMPLE 1

### Wettable Powder

### Composition in %

| | |
|---|---|
| techn. cyproconazole (with 91 % active material) | 0.55 |
| techn. mancozeb (with 85 % active material) | 83.00 |
| dispersant [1] | 6.00 |
| wetting agent [2] | 1.45 |
| filler [3] | 9.00 |
| **total** | 100.00 |

[1] for example sodium or calcium lignosulphonate or sodium polynaphthalene sulphonate
[2] for example nonylphenol or sodium lauryl sulphate
[3] for example kaolin, colloidal silicon dioxide or talc.

All the components are mixed and they are ground until obtaining particles having an average dimension of between 2 and 5 microns.

4

**EXAMPLE 2**

**Wettable granules**

**Composition in %**

| | |
|---|---|
| techn. cyproconazole (with 91 % active material) | 0.55 |
| techn. mancozeb (with 85 % active material) | 83.00 |
| dispersant [1] | 15.45 |
| wetting agent [2] | 1.00 |
| **total** | 100.00 |

[1] for example sodium lignosulphonate or sodium polynaph-thalene sulphonate
[2] for example sodium isopropyl naphthalene sulphonate or sodium lauryl sulphate.

All the components are mixed with water so as to obtain a paste, which is ground in a ball mill until the particles have a dimension of between 1 and 5 microns. The paste obtained is then dried and it is transformed by known methods in wettable granules.

**EXAMPLE 3**

**Concentrated suspension**

**Composition in %**

| | |
|---|---|
| techn. cyproconazole (with 91 % active material) | 0.25 |
| techn. mancozeb (with 85 % active material) | 37.80 |
| dispersant [1] | 5.00 |
| softening agent [2] | 1.00 |
| antigel [3] | 6.00 |
| thickener | 0.30 |
| water | 49.65 |
| **total** | 100.00 |

[1] for example sodium lignosulphonate or sodium polynaph-thalene sulphonate
[2] for example nonylphenol or a sodium alkyl naphthalene sul-phonate
[3] for example ethylene glycol or propylene glycol.

All the components are mixed with water so as to obtain a paste which is ground using a ball mill until the dimension of the particles is between 1 and 5 microns.

**EXAMPLE 4**

In the preceding Examples 1 to 3, mancozeb is replaced by zineb, maneb, mancopper or propineb.

**EXAMPLE 5**

The efficiency of the mixture according to the invention in controlling downy mildew has been demonstrated in tests made on vine plots. In these tests, an aqueous composition formulated according to Example 1 or 2, and containing per 100 litres, 1 g of cyproconazole and 140 g of mancozeb, is applied by spraying. The composition is applied at doses ranging from 600 to 1300 l/ha and at different stages of development of the vine, from the 6-7 leaf stage until ripening. After application, the average rate of attack on leaves and on grapes is determined as %. Effective action against downy mildew is observed, the average rate of attack of the treated plants being generally less than 25 % of leaves and less than 20 % of grapes, whilst untreated control plants have a rate of attack of 98 % on leaves and 90 % on grapes. In these tests, the mixture has an activity which is markedly superior to the activity of each of the constituents when taken individually.

Satisfactory results are similarly obtained with the compositions of Examples 3 to 4.

**Claims**

1. A method of controlling downy mildew and phytophthora species on plants, which comprises treating the plant to be protected or its locus with a downy mildew and phytophthora species controlling aggregate amount of cyproconazole [hereinafter called Component (b)] and a dithiocarbamate fungicide selected from zineb, maneb, mancopper, mancozeb and propineb [hereinafter called Component (a)], characterised in that Component (a) is employed at an application rate below that necessary to control downy mildew and phytophthora species when employed as sole active agent.

2. The method of Claim 1, wherein Component (b) is applied at a rate of from 5 g to 50 g/ha

3. The method of Claim 2, wherein Component (a) is applied at a rate of from 0.7 to 2.1 kg/ha.

4. The method of Claims 1 to 3, wherein Component (a) is mancozeb.

5. A fungicidal composition containing cyproconazole (b) and a dithiocarbamate fungicide (a) selected from zineb, maneb, mancopper, mancozeb and propineb together with agriculturally acceptable diluents for the control of downy mildew and phytophthora species, characterised in that it contains a quantity of Component (b) capable of potentiating the fungicidal effect of Component (a) against downy mildew and phytophthora species, wherein the weight ratio of Component (b): Component (a) is in the range of from 1:360 to 1:40.

6. The fungicide according to Claim 5, wherein the weight ratio of Component (b): Component (a) is in the range of from 1:320 to 1:65.

7. The fungicide according to Claim 6, wherein the weight ratio of Component (b): Component (a) is in the range of from 1:300 to 3:260.

8. The fungicide of Claims 5 to 7 comprising at least 110 parts by weight of Component (a) for one part by weight of Component (b).

9. The fungicide of Claim 8, wherein the weight ratio of Component (b): Component (a) is in the range of from 1:130 to 1:150.

10. The fungicide of Claims 5 to 9, wherein Component (a) is mancozeb.

11. The use of cyproconazole as a potentiator in a fungicidal composition for the control of downy mildew and phytophthora species containing a dithiocarbamate fungicide selected from zineb maneb, mancopper, mancozeb and propineb, and cyproconazole and an agriculturally acceptable diluent

12. A fungicidal composition containing: cyproconazole (b) and a dithiocarbamate fungicide (a) selected from zineb, maneb, mancopper, mancozeb and propineb together with agriculturally acceptable diluents, characterised in that it contains at least 110 parts by weight of Component (a) for one part by weight of Component (b).

EP 0 511 167 B1

## Patentansprüche

1. Ein Verfahren zur Bekämpfung von falschem Mehltau und Phytophthora-Spezies auf Pflanzen, welche die Behandlung der zu schützenden Pflanzen oder ihre Standortes mit einer falschen Mehltau und Phtytophthora-Spezies bekämpfenden Gesamtmenge von Cyproconazole [im folgenden Komponente (b) genannt] und einem Dithiocarbamat-Fungizid ausgewählt unter Zineb, Maneb, Mancopper, Mancozeb und Propineb [im folgenden Komponente (a) genannt] umfassen, dadurch gekennzeichnet, dass das Komponente (a) in einer Menge verwendet wird, die tiefer ist als diejenige, welche zur Bekämpfung von falschem Mehltau und Phytophthora-Spezies notwendig ist, wenn diese Komponente als alleiniger Aktivstoff eingesetzt wird.

2. Verfahren gemäss Anspruch 1, worin die Komponente (b) bei einer Aufwandmenge von 5 g bis 50 g/ha angewendet wird.

3. Verfahren gemäss Anspruch 2, worin die Komponente (a) in einer Aufwandmenge von 0,7 bis 2,1 kg/ha angewendet wird.

4. Verfahren gemäss Ansprüchen 1 bis 3, worin die Komponente (a) Mancozeb ist.

5. Fungizide Zusammensetzung enthaltend Cyproconazole (b) und ein Dithiocarbamat-Fungizid (a) ausgewählt unter Zineb, Maneb, Mancopper, Mancozeb und Propineb zusammen mit in der Landwirtschaft annehmbaren Verdünungsmitteln zur Bekämpfung von falschem Mehltau und Phytophthora-Spezies, dadurch gekennzeichnet, dass es eine Menge an Komponente (b) enthält, welche geeignet ist, den fungiziden Effekt der Komponente (a) gegen falschen Mehltau und Phytophthora-Spezies zu verstärken, wobei das Gewichtsverhältnis der Komponente (b) : Komponente (a) im Bereich von 1:360 bis 1:40 liegt.

6. Ein Fungizid gemäss Anspruch 5, worin das Gewichtsverhältnis von Komponente (b) : Komponente (a) im Bereich von 1:320 bis 1:65 liegt.

7. Ein Fungizid gemäss Anspruch 6, worin das Gewichtsverhältnis von Komponente (b) : Komponente (a) im Bereich von 1:300 bis 3:260 liegt.

8. Ein Fungizid gemäss Ansprüchen 5 bis 7 enthaltend wenigstens 110 Gewichtsteile der Komponente (a) auf ein Gewichtsteil der Komponente (b).

9. Ein Fungizid gemäss Anspruch 8, worin das Gewichtverhältnis der Komponente (b) : Komponente (a) im Bereich von 1:130 bis 1:150 liegt.

10. Ein Funzigid gemäss Ansprüchen 5 bis 9, worin die Komponente (a) Mancozeb ist.

11. Die Verwendung von Cyproconazole als Wirkungsverstärker in einem fungiziden Mittel zur Bekämpfung von falschem Mehltau und Phytophthora-Spezies enthaltend ein Dithiocarbamat-Fungizid ausgewählt unter Zineb, Maneb, Mancopper, Mancozeb und Propineb, und Cyproconazole und ein in der Landwirtschaft anehmbares Verdünungsmittel.

12. Fungizides Mittel enthaltend Cyproconazole (b) und ein Dithiocarbamat-Fungizid (a) ausgewählt unter Zineb, Maneb, Mancopper, Mancozeb und Propineb zusammen mit in der Landwirtschaft annehmbaren Verdünnungsmittel, dadurch gekennzeichnet, dass es wenigstens 110 Gewichtsteile der Komponente (a) auf ein Gewichtsteil der Komponente (b) enthält.

## Revendications

1. Une méthode de lutte contre le mildiou et les espèces de Phytophthora sur les plantes, qui comprend le traitement de la plante à protéger ou de sa zone de croissance avec une quantité globale efficace pour la lutte contre le mildiou et les espèces de Phytophthora de cyproconazole [désigné ci-après composant (b)] et d'un fongicide à base de dithiocarbamate choisi parmi le zinèbe, le manèbe, le mancopper, le mancozèbe et le propinèbe [désigné ci-après composant (a)],
caractérisée en ce que le composant (a) est utilisé à une dose d'application inférieure à celle nécessaire pour lutter contre le mildiou et les espèces de Phytophthora lorsque celui-ci est employé comme agent actif unique.

7

2. La méthode selon la revendication 1, dans laquelle le composant (b) est appliqué en une quantité de 5 à 50 g/ha.

3. La méthode selon la revendication 2, dans laquelle le composant (a) est appliqué en une quantité de 0,7 à 2,1 kg/ha.

4. La méthode selon les revendications 1 à 3, dans laquelle le composant (a) est le mancozèbe.

5. Une composition fongicide contenant du cyproconazole (b) et un fongicide à base de dithiocarbamate (a) choisi parmi le zinèbe, le manèbe, le mancopper, le mancozèbe et le propinèbe, en association avec des diluants acceptables en agriculture pour lutter contre le mildiou et les espèces de Phytophthora, caractérisée en ce qu'elle contient une quantité de composant (b) capable de renforcer l'effet fongicide du composant (a) contre le mildiou et les espèces de Phytophthora, le rapport pondéral du composant (b) au composant (a) étant compris entre 1:360 et 1:40.

6. Le fongicide selon la revendication 5, dans lequel le rapport pondéral du composant (b) au composant (a) est compris entre 1:320 et 1:65.

7. Le fongicide selon la revendication 6, dans lequel le rapport pondéral du composant (b) au composant (a) est compris entre 1:300 et 3:260.

8. Le fongicide selon les revendications 5 à 7, comprenant au moins 110 parties en poids de composant (a) pour une partie en poids de composant (b).

9. Le fongicide selon la revendication 8, dans lequel le rapport pondéral du composant (b) au composant (a) est compris entre 1:130 et 1:150.

10. Le fongicide selon les revendications 5 à 9, dans lequel le composant (a) est le mancozèbe.

11. L'utilisation du cyproconazole pour renforcer l'activité fongicide dans une composition fongicide pour la lutte contre le mildiou et les espèces de Phytophthora, cette composition contenant un fongicide à base de dithiocarbamate choisi parmi le zinèbe, le manèbe, le mancopper, le mancozèbe et le propinèbe, et le cyproconazole ainsi qu'un diluant acceptable en agriculture.

12. Une composition fongicide contenant:

- du cyproconazole (b), et
- un fongicide à base de dithiocarbamate (a) choisi parmi le zinèbe, le manèbe, le mancopper, le mancozèbe et le propinèbe,

en association avec des diluants acceptables en agriculture, caractérisée en ce qu'elle contient au moins 110 parties en poids de composant (a) pour une partie en poids de composant (b).